# EUROPEAN PATENT APPLICATION

(11) **EP 1 571 564 A2**
(43) Date of publication of application: **07.09.2005**
(21) Application number: 05003639.1
(22) Date of filing: 21.02.2005
(51) Int. Cl.: G06F 17/30

(54) **Method and system for network jack location mapping**

(30) Priority: 23.02.2004 US 785437
(71) Applicant: 3Com Corporation, Marlborough, MA 01752-3064 (US)
(72) Inventor: Rubinstein, Alan, Fremont, CA 94536 (US)
(74) Representative: Horton, Andrew Robert Grant

(57) **Abstract**

A method and system for maintaining coherence of locational information in a database of a distributed network of network jack units are disclosed. The method includes initially configuring the locational information accurately, upon which the distributed network is monitored. Upon detecting a change in the distributed network, the significance of that change on the coherence of the locational information is assessed. Upon determining that the change is significant, an action is initiated to update the database and/or take other corrective action.

## Description

The present invention relates to a method and system for enhancing the coherence of a locational database associated with a network.

Modern computing networks allow great benefits by sharing information and computing resources. Such networks have a great variety of applications. In some of these applications, locational information can be valuable. For instance, locational information can be important, even crucial, in networks used for emergency response services (ERS). ERS networks include 'emergency' services, in which in response to a call placed by a person to a '112' telephone number, an ERS network operator is telephonically connected with the person. The person placing the call can then communicate with the ERS operator, who can summon or dispatch ERS personnel and/or units to assist the person placing the '112' call. Locational information relating to the person placing the '112' call, such as a physical address (e.g., of a residential, commercial, phone booth, roadside assistance phone, or other property or place) is automatically made available to the ERS operator. ERS personnel can thus be apprised of the location from which the '112'call was made, even if the person placing the call is unable to provide it.

Such automatic availability can be achieved by several means. One example is automatically accessing a database wherein the telephone number from which the '112' call was placed is mapped to an address or other locational information and displaying that information on a monitor for the ERS operator and/or for the dispatched or summoned units.

Partly in response to the growth of computer based networking, enhanced ERS services are becoming desirable. Enhanced services should be able to automatically provide accurate locational information relating to a '112' caller, even if the '112' call is not placed by conventional telephony. For instance, a '112' call may be placed using a 'voice over internet protocol' (VOIP).

VOIP may be used with telephones and other equipment, which can be physically connected to a network using network jacks. Locational information to be provided in response to a VOIP placed 'enhanced emergency call' can be ascertained in a manner similar to that discussed above. The location accessed from the database in this example could be the physical location of the network jack through which the 'enhanced emergency call' is placed.

ERS networks are by no means the only networks in which locational information can be valuable. Networks have become commonplace in business, government, hospital, educational, and other enterprises and institutions. In fact, their use continues to grow and expand. In some of these networks as well, locational information relating to devices connected to the network can also be valuable.

For instance, large, modem office complexes (e.g., campuses) may comprise multiple buildings. Where locational information in such an office complex is tied to a port on a telephone or infrastructure switch, movement of the equipment so tied, and/or swapping of ports can cause confusion and possible errors in the database.

Such devices can also be connected to networks using network jacks. Knowing the location of the network jacks through which various devices are connected to a network can be used to locate the equipment connected there through. For instance, some modem medical equipment such as a portable X-Ray machine can be connected through network jacks to a network in a hospital.

In a large hospital, it may become expedient to locate the portable X-Ray machine over the hospital's network. A query can be broadcast over the network for the device having an identifier corresponding to the network interface card (NIC) or media access control layer (MAC) address to respond. Upon that unit responding, the network jack through which it responded can be ascertained.

Knowing the location of that network jack can allow the device being sought to be tracked down. Conventionally, the location of network jacks can be recorded upon their installation. Their locations can be data based. The database can be accessed any time thereafter, such as while seeking the portable device, when the location corresponding to that network jack must be determined. The databased location of network jacks may however be incorrect. For instance, the location of network jacks can change over time. The network jacks can be moved, replaced, and/or swapped with another network jack. Thus, the information in a database that corresponds to the location of a network jack can become inaccurate (i.e. corrupt) over time.

Inaccuracy relating to the databased location of network jacks can be inconvenient. For example, the X-Ray machine may prove difficult to find, with technicians "leading a wild goose chase" for it. This can be troubling if that particular X-Ray unit is needed. However, such inaccuracy can conceivably have tragic results.

Coherence can be desirable in a database of a distributed network of network jack units. Accurate location information can be desirable for initial configuration. It could be desirable to monitor the network with such information. If a change in the distributed network is detected, it would be desirable to assess the significance of that change on the coherence of the locational information. An action to update the database could be desirable, as could other corrective action, where such changes are detected deemed significant.

A method and system for maintaining coherence of locational information in a database, which can be centralized, of a distributed network of network jack units are disclosed. The method includes initially configuring the locational information accurately, after which the distributed network is monitored. Monitoring can be performed by a central and/or redundant management entity. Upon detecting a change in the distributed network, the significance of that change on the coherence of the locational information is assessed. Upon determining that the change is significant, an action is initiated to update the database and/or take other corrective action.

In one embodiment, the locational data is accurately configured initially by accurately entering locational information at one of the network jack units. That locational information is provided to the database. This can be performed for instance by uploading the locational information from the network jack unit over the network or transferring the locational information from a storage entity such as a portable data storage device.

Such portable storage devices include, but are not limited to, a computer (including a computer used to enter the locational data), a dedicated data storage and transfer entity, or a portable data storage medium, such as a compact disc, diskette, universal serial bus (USB) port data loader, or the like.

In one embodiment, detecting a change in the distributed network comprises discovering that one of the network jack units lacks locally associated locational information. Assessing the significance of this change can comprise inferring that the network jack unit does not have locational information entered therein. This can be corrected by providing that information to the network jack unit.

In one embodiment, detecting a change in the distributed network comprises discovering that one of the network jack units has locally associated locational information which seems to be new. Assessing the significance of this change can comprise inferring that the network jack unit can have locational information entered therein that is incorrect. Appropriate corresponding actions can include alerting that the locational information can be corrupt and correcting it.

In one embodiment, detecting a change in the distributed network comprises discovering that a media access control (MAC) address of one of the network jack units differs from a MAC address listed for that network jack in the database. Assessing the significance of this change can comprise inferring that the network jack unit can have had correct locational information entered therein that is incorrect. One appropriate corresponding action can include updating the database.

One embodiment provides a method for monitoring a distributed network of network jack units to maintain coherence of locational information in a database of the network. This method can comprise polling one of the network jack units wherein the network jack unit has been known (e.g., previously) to a management entity performing the monitoring. Upon detecting no response to the polling, a reconnect event relating to that network jack unit is watched for. Upon detecting a reconnect event, the identity of the network jack unit is checked.

In one embodiment, upon detecting that the identity differs from a value for an identity associated with the network jack unit that is stored in the database, it is inferred that the locational information can be corrupt. A corresponding alert can be sent and an action can be taken to investigate and correct the locational information.

This method can also comprise detecting a power loss to one of the network jack units and verifying the locational information as related to that unit. In this embodiment, the method further comprises detecting an event and responsively checking for an indication of a power loss. The event can comprise a reboot event. If so, a power loss flag in a non-volatile memory can be sought, or a memory location which initiates with a pattern that corrupts on a power loss can be checked.

This method can also comprise detecting an attempt to move one of the network jack units. In this case, the frequency of monitoring the network jack unit, such as for a disconnect transaction, can be increased. The network jack unit can include a tamper sensor which can generate a detectable signal if an attempt is made to, for instance, remove mounting hardware, or another action indicative of a moving attempt is taken.

In one embodiment, the method can comprise detecting a change among table associations, such as in an infrastructure switch or management entity, and responsively performing a location mapping check. Upon detecting a location mapping change, it can be inferred that the network jack unit was selectively upgraded and replaced, and the database can be updated. Upon detecting no location mapping change, another port can be checked. Upon detecting a port swap, a management entity can be alerted.

### Summary of the invention as claimed

In one aspect the invention provides a method for maintaining coherence of location information in a database of a distributed network of network jack units, comprising: accurately configuring the location information of the database of the distributed network of network jack units initially; monitoring the distributed network of network jack units; upon detecting a change in the distributed network, assessing the significance of the change in the coherence of the location information of the database of the distributed network of network jack units; and upon determining that the change is significant, initiating an action to update the database of the distributed network of network jack units. The database may comprise a centralized database.

The accurate configuring of the database may comprise accurately entering the location information at one of the network jack units; and providing the location information to the database, for example by uploading the location information from the network jack unit or transferring the location information from a storage entity.

The storage entity comprises a portable data storage device, for example a first computer used to perform the accurately entering of the location information; or a second computer; or a dedicated data storage and transfer entity; or a device comprising a portable data storage medium.

The monitoring may be performed by a network management entity, which may comprise a central control station or a redundant control station.

The operation of detecting may comprise discovering that one of the network jack units lacks locally associated location information.

The assessing of the significance of the change in the coherence of the location information may comprise inferring that the network jack unit does not have locational information entered therein and the said action may comprise providing the locational information to the network jack unit.

The detecting may comprise discovering that one of the network jack units has locally associated locational information which is apparently new.

The assessing of the significance of the change in the coherence of the locational information may comprise inferring that the network jack unit possesses locational information that is incorrect and the said action may comprise providing an alert and correcting the locational information.

The operation of detecting may comprise discovering that a media access control (MAC) address of one of the network jack units differs from a MAC address listed for the network jack in the database.

The assessing of the significance of the change in the coherence of the locational information may comprise inferring that the network jack unit has had correct locational information entered therein and wherein the action comprises updating the database.

In another aspect the invention provides a method for monitoring a distributed network of network jack units to maintain coherence of locational information in a database of the network, comprising: polling one of the network jack units wherein the network jack unit has been known to a management entity performing the monitoring; upon detecting no response to the polling, watching for a reconnect event relating to the network jack unit; and upon detecting the reconnect event, checking an identity of the network jack unit. The method may further comprise, upon detecting that the identity differs from a value for an identity associated with the network jack unit stored in the database, inferring that the locational information can be corrupt; sending a corresponding alert; and taking an action to investigate and correct the locational information.

In another aspect the invention provides a method for monitoring a distributed network of network jack units to maintain coherence of locational information in a database of the network, comprising: detecting a power loss to one of the network jack units; and verifying the locational information as related to the network jack unit. This method may further comprise detecting an event; and
in response to detecting the event, checking for an indication of a power loss, wherein the checking is performed prior to the detecting a power loss. The event may comprise a reboot event and wherein the checking comprises an action selected from the group consisting essentially of checking for a power loss flag in a non-volatile memory and checking a memory location for a corrupted pattern wherein the memory location initiates with a pattern that corrupts on a power loss, and wherein the non-volatile memory and the memory location are associated with the network jack unit.

In yet another aspect the invention provides a method for monitoring a distributed network of network jack units to maintain coherence of locational information in a database of the network, comprising: detecting an attempt to move one of the network jack units; and increasing a frequency of monitoring the network jack unit for a disconnect transaction. This method may further comprise generating an alert. The network jack unit may comprise a tamper sensor and wherein the detecting may comprise sensing a signal from the tamper sensor.

In yet another aspect the invention provides a method for monitoring a distributed network of network jack units to maintain coherence of locational information in a database of the network, comprising: detecting a change among table associations; in response to the detecting, performing a locational mapping check; upon detecting a locational mapping change: inferring that the network jack unit was selectively upgraded and replaced and updating the database; upon detecting no locational mapping change, checking another port; and upon detecting a port swap, alerting a management entity.

In yet another aspect the invention provides a computerized system for maintaining coherence of locational information in a database of a distributed network of network jack units, comprising a network entity coupled to the database for providing access to the database and communication with the network jack units; and a management entity coupled to the database and to the network jack units through the network entity for monitoring the distributed network of network jacks; wherein the management entity comprises a computer and wherein the system is organized: to perform an accurate configuration of the locational information of the database of the distributed network of network jack units initially; to monitor the distributed network of network jack units; upon detecting a change in the distributed network, to make an assessment of the significance of the change on the coherence of the locational information of the database of the distributed network of network jack units; and upon determining that the change is significant, to initiate an action to update the database of the distributed network of network jack units.

The database may comprise a centralized database. The system may perform the configuration by accurately entering the locational information at one of the network jack units; and providing the locational information to the database, for example either by uploading the locational information from the network jack unit or by transferring the locational information from a storage entity. This storage entity may comprise a portable data storage device, which may be a computer used to perform the entry of the locational information at one of the network jack units; or a second computer; or a dedicated data storage and transfer entity; or a device comprising a portable data storage medium. Portable storage devices include, but are not limited to, a computer (including a computer used to enter the locational data), a dedicated data storage and transfer entity, or a portable data storage medium, such as a compact disc, diskette, universal serial bus (USB) port data loader.

In this system the network management entity may be either centralized or distributed. In particular the network management entity may comprise a central control station and a redundant control station.

This system may detect a change in the distributed network by discovering that one of the network jack units lacks locally associated locational information, and may perform an inference that the network jack unit does not have locational information entered therein; and the said action may comprise providing the locational information to the network jack unit. The system may be organized to discovering that one of the network jack units has locally associated locational information which is apparently new. The system may be organized to infer that the network jack unit may thereby possess incorrect locational informational, to provide an alert that the locational information may be corrupt; and to alter the locational information. The system may be further organized to discover that a media access control (MAC) address of one of the network jack units differs from a MAC address listed for the network jack in the database; to infer that the network jack unit has had correct locational information entered therein and to update the database.

The invention also provides a computer usable medium having a computer readable program code embodied therein for causing a computer system to execute a method for maintaining coherence of locational information in a database of a distributed network of network jack units, the method comprising: accurately configuring the locational information of the database of the distributed network of network jack units initially; monitoring the distributed network of network jack units; upon detecting a change in the distributed network, assessing the significance of the change on the coherence of the locational information of the database of the distributed network of network jack units; and upon determining that the change is significant, initiating an action to update the database of the distributed network of network jack units.
The method may have any or all of the attributes recited above.

In the accompanying drawings:
Figure 1 depicts a network environment.
Figure 2 depicts a network jack, coupling a device to a network.
Figure 3 depicts an intelligent network jack.
Figure 4 is a flowchart of a process for maintaining coherence in a network locational database.
Figure 5 is a flowchart of a process for initially accurately configuring network jack locational information.
Figure 6 is a flowchart of a process for detecting corruption of locational information after installation of a network jack.
Figure 7 is a flowchart of an exemplary process for detecting new locational mapping information after installation of a network jack.
Figure 8 is a flowchart of an exemplary process for confirming locational information upon a disconnect/reconnect event.
Figure 9 is a flowchart of an exemplary process for verifying locational information and active status of a network jack unit of a distributed network of network jack units.
Figure 10 is a flowchart of an exemplary process for detecting a power loss in a distributed network of network jack units.
Figure 11 is a flowchart of an exemplary process for detecting an attempt to move a network jack unit.
Figure 12 is a flowchart of an exemplary process for verifying locational mapping upon a client event, such as a client disconnect/reconnect.
Figure 13 is a flowchart of an exemplary process for discriminating between a benign network configuration changes and those which can imply possible corruption of locational information.
Figure 14 is a flowchart of an exemplary process for inferring possible corruption of locational information from information relating to an outage duration.

Unless specifically stated otherwise it will\be understood that in the following description all the various method steps refer to the actions and processes of a computer system, or similar electronic computing device.

The computer system or similar electronic computing device manipulates and transforms data represented as physical (electronic) quantities within the computer system's registers and memories into other data similarly represented as physical quantities within the computer system memories or registers or other such information storage, transmission, or display devices. The present invention is also well suited to the use of other computer systems such as, for example, optical computers.

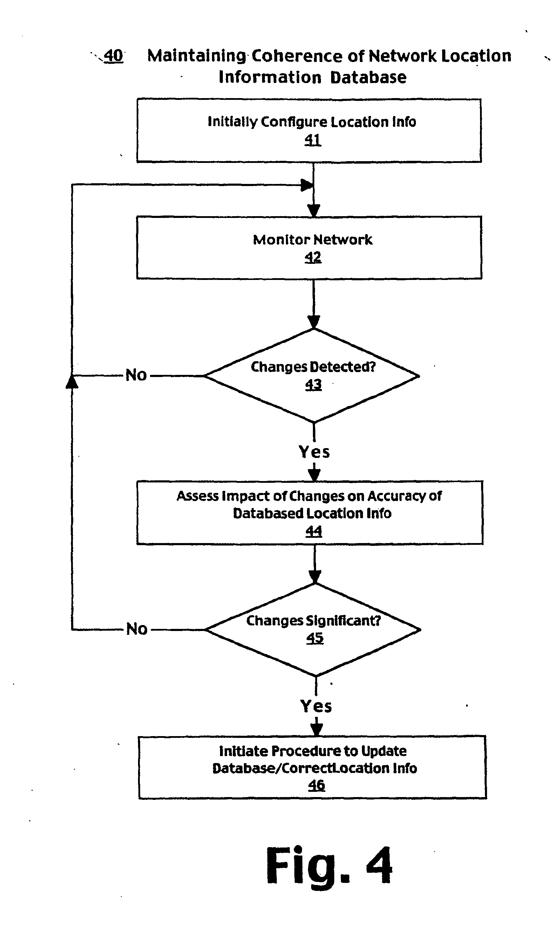

Further, various embodiments of the present invention may be discussed in terms of processes, e.g., the implementation and/or execution of a method. For example, Figures 4-14, all flowcharts, and the respective discussion thereof, refer to processes 40-90, 10, and 1100-1400, respectively, performed in accordance with respective embodiments of the present invention for detecting spoofing by a variety of ways. Flowcharts 4-14 and the accompanying discussion thereof include exemplary processes of respective embodiments of the present invention which, in one embodiment, are carried out by processors and electrical/electronic components under the control of computer readable and computer executable instructions.

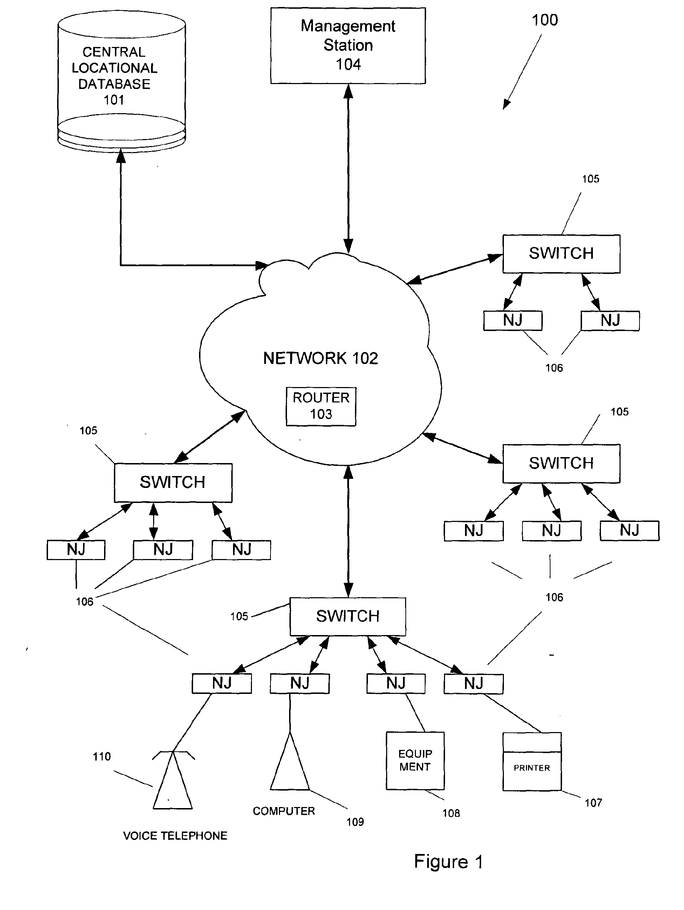

The computer readable and computer executable instructions reside, for example, in data storage features, memory, caches, and processors of a computer comprising management entity 104 (Figure 1). However, the computer readable and computer executable instructions may reside in any type of computer readable medium. Although specific processes are disclosed in Figures 4-14, such processes are exemplary. That is, embodiments of the present invention are well suited to performing various other processes or variations of the processes including other steps or sequences of steps than those recited in Figures 4-14. Within the present embodiment, it should be appreciated that the process of the flowcharts rendered in Figures 4-14 and their processes, may be performed by, e.g., executed upon software, firmware, and/or hardware or any combination of software, firmware, and/or hardware.

Figure 1 depicts a distributed network environment 100, according to one embodiment of the present invention. Network environment 100 comprises a distributed network of network jacks 106. Within network environment 100, a central database 101 contains information relating to the locations of network jacks 106. Central database 101 can be accessed, for instance by a management station 104, via a network 102.

Network 102 may be any type of network. For instance, network 102 can be an institutional network or other intranet. Network 102 may be a wide area network (WAN), a local area network (LAN), or the Internet. Network 102 is managed (e.g., controlled, configured administrated, and so on) in one embodiment by management centre 104.

Within and/or through network 102, network traffic can be routed between central database 101, management station 104, and/or any of switches 105 and any components or devices 125 coupled through them. Devices 125 are connected to the network switches via network jacks 106. Traffic can be routed through network 102 at least in part by a router 105.

Devices 125 include any devices capable of network coupling through a network jack 106. Such devices are exemplified herein by voice telephone 110, a laptop, desktop, or other computer 109, a network capable piece of equipment 108, which can be portable, and a printer 107. Devices 107-110 are exemplary of and are not to be construed as limiting devices 125.

Any devices capable of network coupling can comprise devices 125. Devices 125 each have a unique identity, which can be expressed by one or more of several unique identifiers. Such identifiers are known in the art. Examples include Internet Protocol (IP) addresses associated with a network interface card (NIC) and media access control (MAC) card identity numbers. Such unique identifiers are used, in one embodiment, to determine an identity for a particular device 125 connected through a network jack 106.

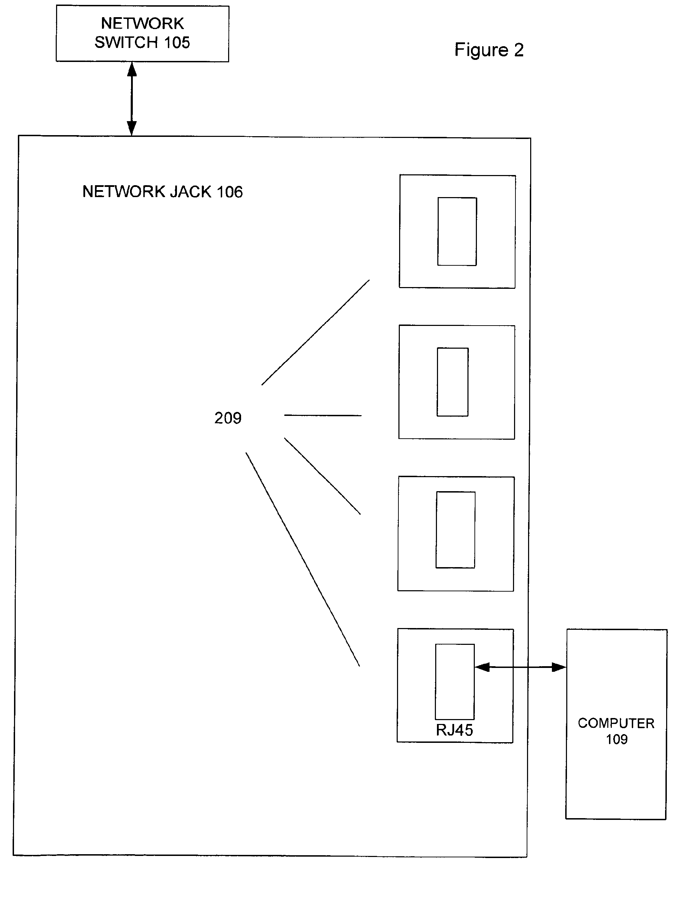

Figure 2 depicts a network jack 106, coupling a device 125 to network 102 (Fig. 1) through network switch 105, according to one embodiment of the present invention.

Connections of devices 105 are made with network jack 106, in one embodiment, by any of connection receptacles (e.g., ports) 209. In one embodiment, connection receptacles 209 comprise RJ45 connectors. However, it is appreciated that the present invention is not limited to any particular connector configuration or type.

Referring again to Figure 1, central database 101 establishes and maintains locational information for distributed network environment 100. Centralized locational database 101 maintains coherence of the locational information and protects it from inadvertent corruption by operating system (OS) and/or memory errors. Coherence maintenance and corruption protection can proceed by techniques known in the art.

Management station 104 comprises a control and monitoring entity and can communicate with the network jacks 106 deployed in distributed network environment 100. In one embodiment, the management station is centralized. In another embodiment, the management station does not comprise a single entity, but rather is distributed and/or redundant functionality.

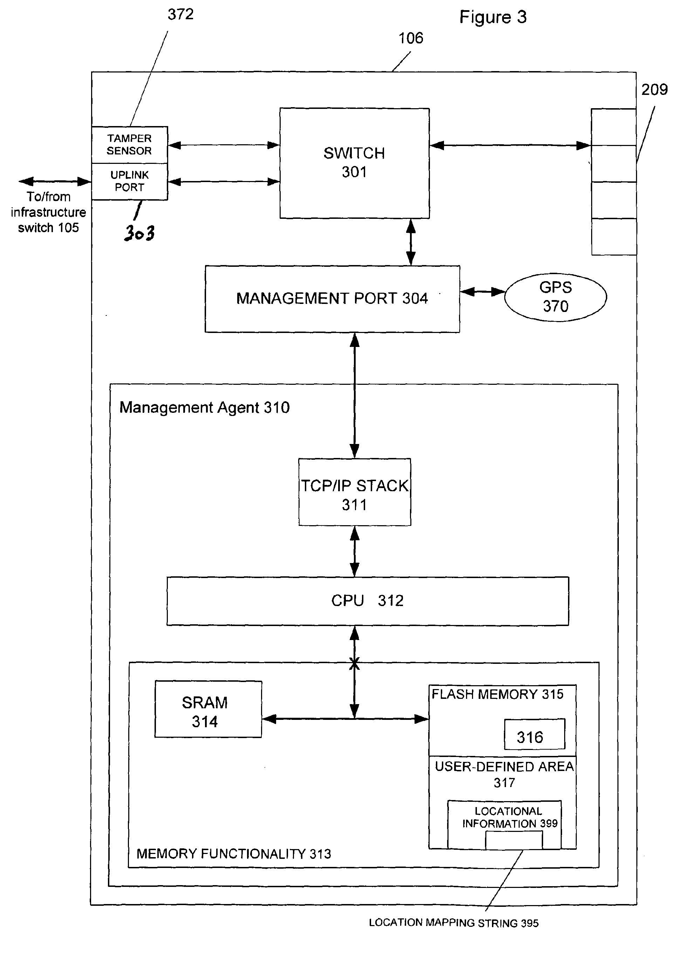

Figure 3 depicts an intelligent network jack 106, according to one embodiment of the present invention. Network jack 106 exemplifies the network jacks 106 of Figures 1 and 2. Personal area network (PAN) devices (e.g., devices 125; Fig. 1, 2) are coupled to ports 209 and can be isolated through switch 301.

Devices are connected through uplink port 303 to an infrastructure switch (e.g., switch 105; Fig. 1,2). Uplink port 303 includes or connects to a management port 304. Management port 304 couples uplink port 303 to a management agent 310. Management agent 310 provides or imparts a degree of intelligence to network jack 106. Communication between the management agent 310 and the network can be regulated or controlled using the Simple Network Management Protocol (SNMP) or a similar modality.

Switch 301, management port 304, and/or management agent 310 can act to receive locational information. For instance, locational information can be entered locally, such as during preparations for installation and/or programming of NJU 116. Switch 301, management port 304, and/or management agent 310 can also act to secure the accuracy of its stored locational information. For instance, after programming, a lockout can be set so as to prohibit any change to this information without invoking a security protocol, such as a password or other technique.

Management agent 310 includes a Transfer Control Protocol/Internet Protocol (TCP/IP) stack 311. TCP/IP stack 311 is coupled to a processor, exemplified by central processing unit (CPU) 312. CPU 312 is coupled to a memory functionality 313. Memory functionality 313 includes a static memory feature, exemplified by static random access memory (SRAM) 314.

Memory functionality 313, in one embodiment, includes a flash memory 315. Flash memory 315 is configurable. A content secure area 316 is included, as well as a user defined area 317. In one embodiment, user defined area 317 contains information 399 that can be defined by a user. Information 399 can comprise locational information relating to a network, as connected through uplink port 303, such as a locational map string 395.

It can occur that the accuracy of the databased network locational information degrades over time (e.g., reflects informational entropy). Such degradation invalidates the locational information within the network jack 106 and corrupts the database information. This degradation can result from various sources and/or conditions.

For instance, a network jack may be replaced with a different unit, e.g., as part of an upgrade rollout. The new unit may inadvertently not be programmed with correct locational information at installation. Another example, which can be troublingly not uncommon in conventional network environments, is network jacks being swapped, such as for a quick fix to replace a failed unit, or as part of debug action to locate and/or isolate a fault.

Intelligent network jack 106 includes, in one embodiment, a tamper detection sensor 372. Tamper detection sensor can be a receptacle for a piece of mounting hardware such as a mounting screw that is for instance electronically and/or electromechanically configured , for instance, to detect an effort at removing a piece of mounting hardware.

From such detection, it can be inferred that the location of the network jack may have physically changed. Tamper detection sensor 372 can generate a tamper signal to the management agent 310. Management agent 310 can generate a corresponding location information corruption alert to a management station and central database (e.g., management station 104, central database 101; Fig. 1).

Referring to Figure 1 again, locational map information (e.g., location mapping string 395) is provided to central database 101. Central database 101 stores this locational information. The information is retrievable, such as by management centre 104.

The ability for information 399 to be corrected as necessary, e.g., as the location of network jack 106 changes, allows the coherence of the locational information stored in the central database 101 to be maintained. Advantageously, maintaining the coherence of locational information in central database 101 helps ensure that the locational information therein remains accurate, and is accurate when used.

Central database 101 and/or management centre 104 log changes to locational information and maintain files which record these changes. When possible, corruption of the locational information in central database 101 is detected or inferred, alert messages are generated. Advantageously, such alerts can trigger automatic investigative polling of intelligent network jacks, and/or allow dispatch of troubleshooting.

In one embodiment, locational information 399 incorporates an embedded check sum. In one exemplary pre-defined format for locational information 399, locational map string 395, to be entered into flash memory 315. Corruption of the locational information characterized by a hard error can be detected at installation, for instance as the locational information is read locally by an installer. Alternatively or additionally, the corruption can be detected at the central database 101 upon uploading from the intelligent network jack 106.

After installation, periodic checking by CPU 312 of flash memory 315 allows detection of corruption such as a memory error or an inadvertent overwrite, and reporting of an alert message. Such periodic checking can comprise part of a more general memory check strategy and can also be performed as a focused check.

### Exemplary Process for Maintaining Locational Database Coherence

Figure 4 is a flowchart of an exemplary process 40 for maintaining coherence in a network locational database, according to an embodiment of the present invention. Process 40 begins with step 41, wherein network valuable locational information (such as the physical location of each of network jacks 106; Fig. 1) is initially configured.

In step 42, the network (e.g., network environment 100; Fig. 1) is monitored, so as to detect any changes from which changes in the accuracy of databased locational information can be inferred. In step 43, it is determined whether any such changes are detected. If not, process 40 repeats step 42, thus continuing to monitor for such changes.

If it is determined that a change is detected wherein it may be inferred that the accuracy of databased locational information has changed, then in step 44, the impact of those changes on the accuracy of the locational information databased is assessed. In step 45, it is determined whether the impact on locational accuracy is significant.

If it is determined that the impact on locational accuracy is not significant, process 40 repeats step 42, thus continuing to monitor for such changes. If it is determined that the impact on accuracy is significant, then in step 46, a procedure is initiated to update and/or correct the locational information, completing process 40.

Initial configuration of network jack locational information (e.g., step 41 or process 40; Fig. 4) can comprise accurate data entry into individual network jacks at the time they are installed. For instance, installations standards comprise, in one embodiment, specifications to control the entry of accurate locational information.

### Exemplary Process for Initial Locational Information Configuration

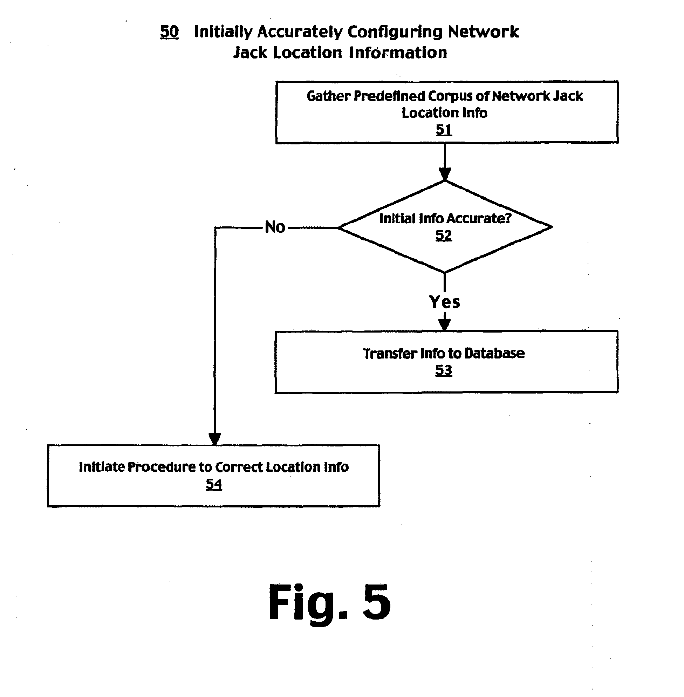

Figure 5 is a flowchart of a process 50 for initial accurate configuration of network jack location information, according to one embodiment of the present invention. Process 50 begins with step 51, wherein a predefined corpus of information relating to the location of a network jack to become part of a distributed network of network jacks (e.g., distributed network 100; Fig. 1) is gathered.

Gathering this information can be made accurately at installation time. Various techniques known in the art can be used. For instance, an installer of a network jack can scan information from a label or component of the network jack being installed using a bar code reader into a portable computing device, such as a palmtop or a laptop computer configured to store the data being read, or another such device.

In step 52, it is determined whether the initially gathered information is accurate. Various procedures known in the art can be used. For instance, where a network jack is installed in a location having a specifically listed room number, a corresponding numeric entry can be made. The numeric entry can comprise a check sum, which can be confirmed to ensure accuracy of the initially gathered information.

Any such verification technique can be used in various embodiments. For instance, in one embodiment, a global positioning system (GPS) device is coupled to a network jack (e.g., network jack 106; Fig. 1-3). locational information ascertained by the GPS device is transferred to a data storage functionality of the network jack (e.g., transferred via management port 304 into flash memory 315; Fig. 3).

In step 53, the information is transferred to a database (e.g., central database 101; Fig. 1). The information can be transferred by downloading the information from the storage (e.g., the palm top/lap top) into a central repository (e.g., central storage unit 101; Fig. 1). Such transferal can be accomplished via the network (e.g., distributed network 100; Fig. 1).

### Exemplary Process for Post-Installation Corruption Detection

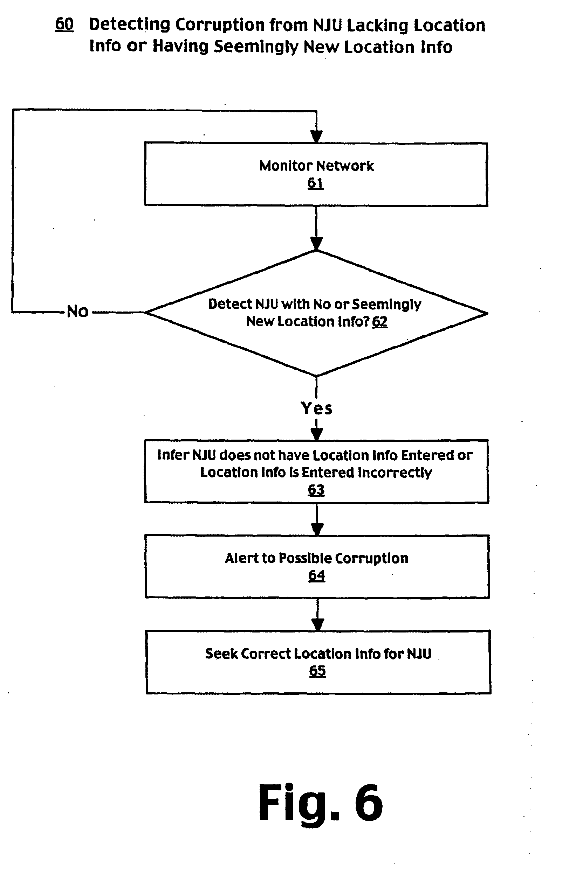

Figure 6 is a flowchart of an exemplary process 60 for detecting corruption of locational information after installation of a network jack, according to one embodiment of the present invention. Process 60 begins with step 61, wherein a distributed network of network jack units (NJU) is monitored.

In step 62, it is determined whether a network jack unit is detected wherein the network jack unit does not have locational information, or wherein the network jack unit has locational information that is seemingly new, such as from the perspective of a locational database and/or a network management centre. If not, then step 61 is repeated.

If a network jack unit is detected wherein the network jack unit does not have locational information, then in step 63 it is inferred that the network jack unit does not have locational information entered. If a network jack unit is detected wherein the network jack unit has locational information that is seemingly new, then in step 63 it is inferred that the network jack unit may have locational information that is incorrectly entered.

In step 64, an alert is generated as to possible corruption of locational information. In step 65, correct locational information is sought for the network jack unit, completing process 65.

### Exemplary Process for Detecting New locational Mapping Information

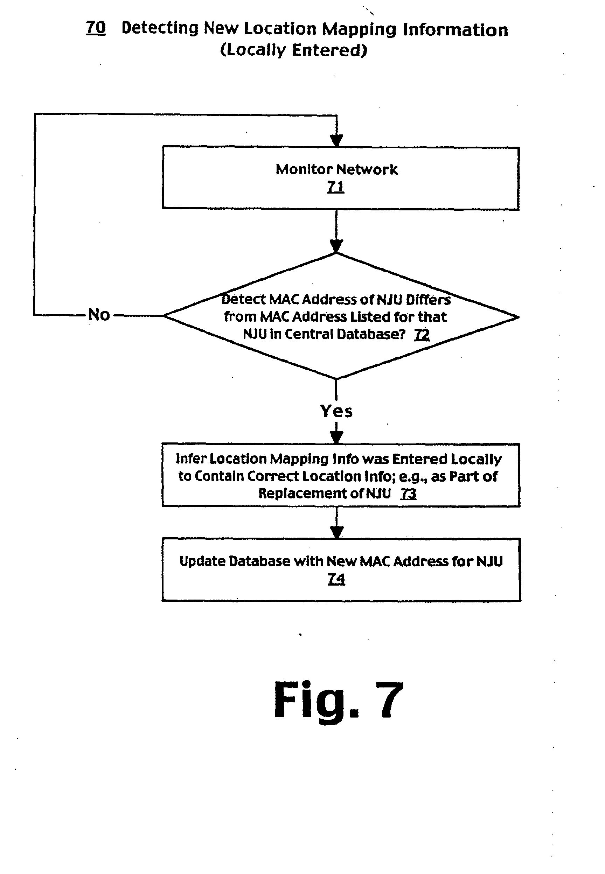

Figure 7 is a flowchart of an exemplary process 70 for detecting new locational mapping information after installation of a network jack, according to one embodiment of the present invention. Although this is in fact a proper, normal occurrence (which can be beneficial), it is desirable for a network management centre and locational database to apprised that it has occurred.

Process 70 begins with step 71, wherein a distributed network of network jack units (NJU) is monitored. In step 72, it is determined whether a media access control (MAC) address of a network jack unit is detected wherein that MAC address differs from the MAC address associated with that network jack unit in a locational database.

While monitoring the network, a network management centre may communicate with a certain network jack unit at a particular location. Upon communicating with the replacement unit, its MAC address is ascertained; MAC addresses are unique. Upon ascertaining this MAC address, it can be compared with that associated in a central locational database with the network jack unit known to have resided there. If not, then step 71 is repeated.

If a network jack unit is detected wherein that MAC address differs from the MAC address associated with that network jack unit in a locational database, then in step 73 it is inferred that the network jack unit has locational mapping information associated with it, which was entered locally so as to be accurate. For instance, such accurate locational mapping information can be locally entered as part of a procedure for replacing a network jack unit.

However, locally entered locational information needs to be addressed by the network management centre (e.g., entity) because the occurrence of activities such as replacement and swapping of units opens up a potential for the introduction of locational information errors. For example, consider a situation in which multiple NJUs are being swapped at once, such as part of a field upgrade.

Under field conditions, for purposes of efficiency, safety, and/or other considerations, technicians sometimes prepare several NJUs at the same time. Such preparations can include computer connection and data transfer, barcode scanning, NJU identification and/or characterization, and/or other data gathering, and in some cases, the "local" entry of locational information.

However, the NJUs are installed after they have been prepared. Installation may be performed by a technician different from the technician who did the preparation. Installation field conditions can be less controlled than preparation field conditions. These factors can combine to introduce a possibility of locational information error introduction. A unit assigned to go to a specific locational may mistakenly be placed in a different location.

To remain confident of having available correct locational information, it is desirable to a network management entity for its location database to reflect totally up to date information relating to the NJUs at all locations. In step 74, a locational database is updated with the new MAC address for and to be associated with the network jack unit. This can complete Process 70.

Consider as one example of an installation mistake that can be made a situation wherein two NJUs, each have valid locational information entered, for instance during their preparation. Each assigned to different specific locations, they each have valid and unique locational information. However, during installation, the units are mistakenly swapped, such as between adjacent rooms or residence addresses.

It can be difficult to detect that a swap like this has occurred. Technological solutions exist. For instance, referring again to Figure 3, in one embodiment intelligent NJU 106 has a global positioning system (GPS) functionality 370 installed. The shift in position as the mistaken swap occurs is detected by GPS 370 and entered into locational information 399 and to its distributed network environment via uplink port 303. One embodiment does not have a GPS device installed.

In other embodiments, procedures are used to infer some of the NJUs within a distributed network of NJUs that can be at risk of swaps having occurred. Advantageously, such procedures can limit the number of NJUs within that network that can be prone to locational information error such that, in a worst case, this limited number can be manually revalidated, locally.

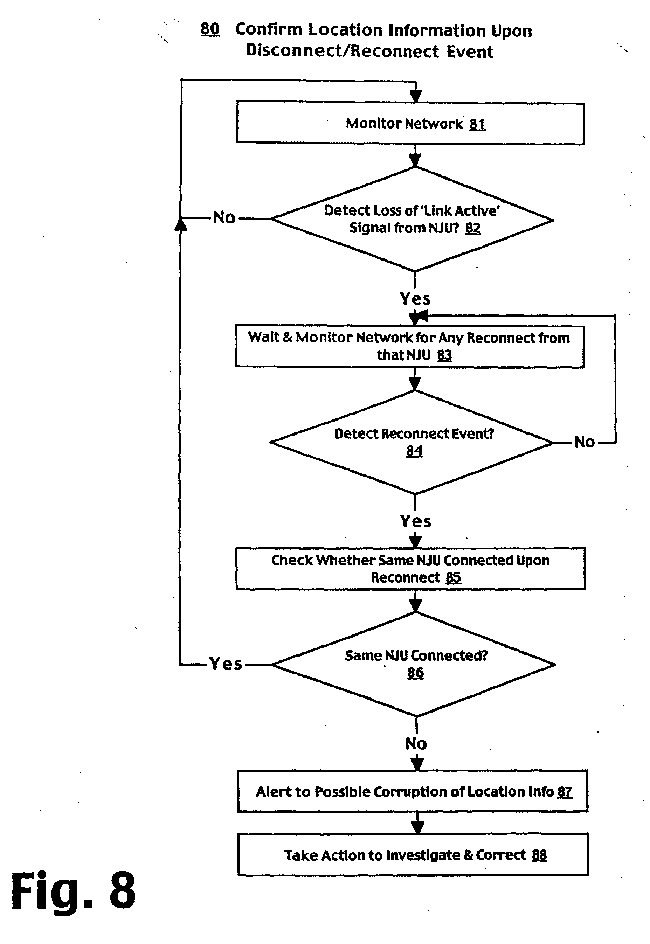

Where a swap occurs on an active distributed network, several approaches, such as those exemplified by process 80, 90, 10, and 1100 (Figures 8, 9, 10, and 11, respectively) below can be used to detect the removal and subsequent reappearance of a specific NJU.

### Exemplary Process for Confirming locational Information Upon a Disconnect/Reconnect Event

Figure 8 is a flowchart of an exemplary process 80 for confirming locational information upon a disconnect/reconnect event, according to one embodiment of the present invention. Process 80 begins with step 81, wherein a distributed network of network jack units (NJU) is monitored.

In step 82, it is determined whether a 'link active' signal loss event from a network jack unit has been detected. If not, then step 71 is repeated. If a 'link active' signal loss event from a network jack unit is been detected (e.g., a 'link active' signal is lost), then in step 83, the monitoring entity waits and monitors the network (e.g., inter alia) for a reconnect event from that unit.

In step 84, it is determined whether a reconnect event has been detected (e.g., that unit reconnects). If not, step 83 is repeated. If it is determined that a reconnect event has been detected, then in step 85, an identity check is conducted. In step 86, it is determined whether the identity associated with the network jack unit reconnecting corresponds to that of the unit that was disconnected. If so, step 81 is repeated.

If it is determined that the identity associated with the network jack unit reconnecting does not correspond to that of the unit that was disconnected, then in step 87, an alert is generated as to possible corruption of locational information. In step 88, action is taken to investigate and to correct the discrepancy, if necessary, completing process 80.

### Exemplary Process for Verifying locational Information and Active NJU Status

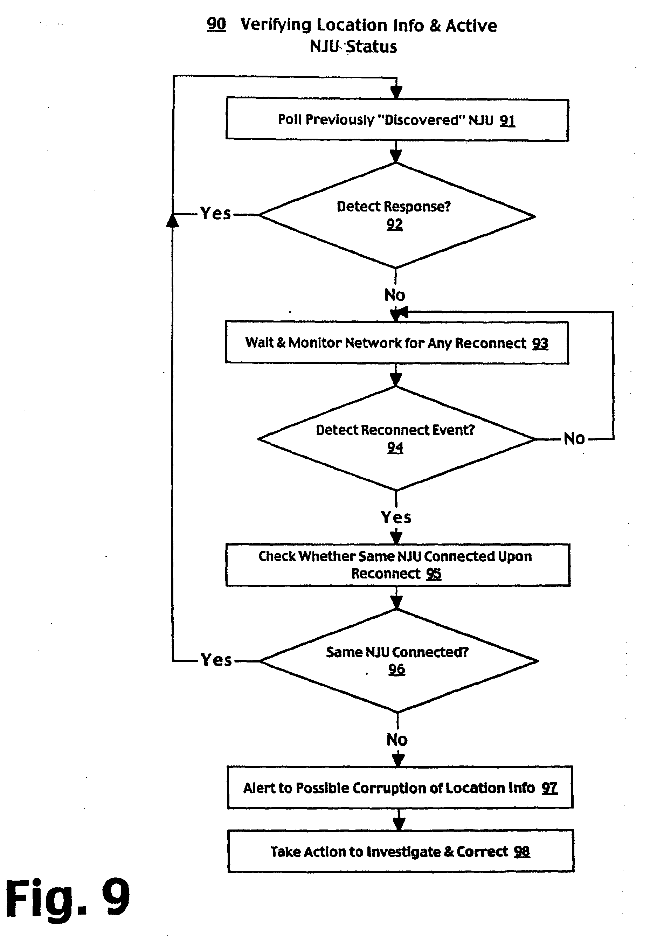

Figure 9 is a flowchart of an exemplary process 90 for verifying locational information and active status of a network jack unit (NJU) of a distributed network of network jack units, according to one embodiment of the present invention. Process 90 begins with step 91, wherein a previously discovered (e.g., known to the network as an entity thereon) is polled.

In step 92, it is determined whether a response to that polling has been detected. If so, then step 91 is periodically repeated. If a response to that polling has not been detected, such as after a specified lapse of time, then in step 93, the monitoring entity waits and monitors the network (e.g., inter alia) for a reconnect event from that unit.

In step 94, it is determined whether a reconnect event has been detected (e.g., that unit reconnects). If not, step 93 is repeated. If it is determined that a reconnect event has been detected, then in step 95, an identity check is conducted. In step 96, it is determined whether the identity associated with the network jack unit reconnecting corresponds to that of the unit that was disconnected. If so, step 91 is repeated.

If it is determined that the identity associated with the network jack unit reconnecting does not correspond to that of the unit that was disconnected, then in step 97, an alert is generated as to possible corruption of locational information. In step 98, action is taken to investigate and to correct the discrepancy, if necessary, completing process 90.

### Exemplary Process for Detecting a Power Loss

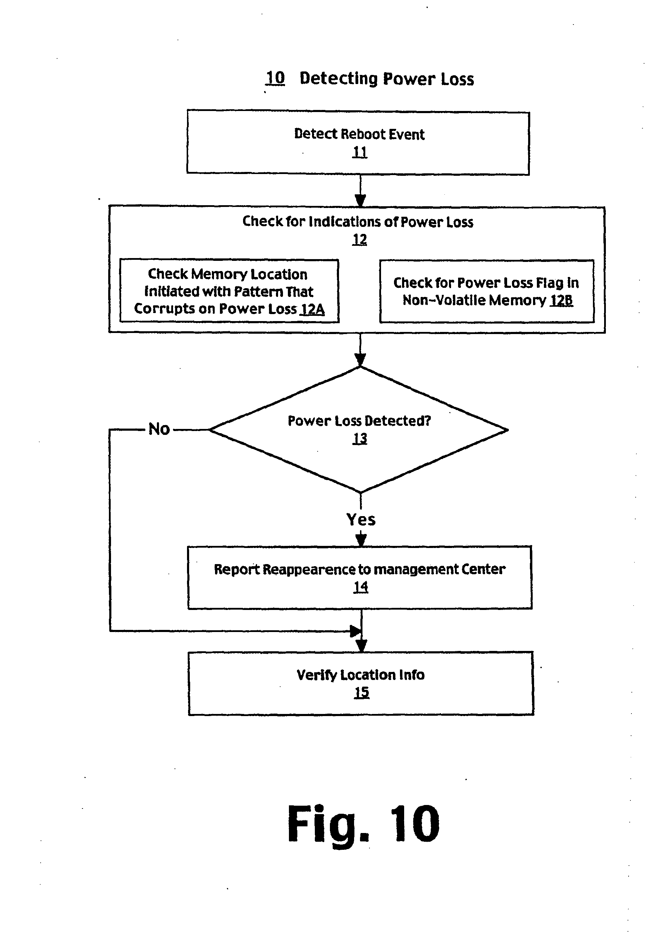

Figure 10 is a flowchart of an exemplary process 10 for detecting a power loss in a distributed network of network jack units (NJU), according to one embodiment of the present invention. Process 10 begins with step 11, wherein a reboot event is detected on the network.

In step 12, indications of a power loss are checked for. A variety of techniques can be used to execute step 12. One exemplary technique is illustrated by step 12A, wherein a memory location is checked wherein that location initiates with a pattern that corrupts on power loss. A second exemplary technique is illustrated by step 12B, wherein a non-volatile memory functionality is checked for a power loss flag, e.g., where the power loss was detected in time to store a loss indication in the non-v
olatile memory. Other techniques can be used to implement step 12.

In step 13, it is determined whether a power loss is detected. For instance, upon checking the memory location that initiates with a pattern that corrupts on power loss, a corrupted pattern is detected. For another instance, upon checking a non-volatile memory functionality, a power loss flag is detected. Other indicators can be used to detect a power loss.

If a power loss is detected, the reappearance, such as upon the reboot event, is reported to a management centre. Then in step 15 (or if no power loss is detected upon the reboot event), locational information is verified.

### Exemplary Process for Detecting an Attempt to Move an NJU

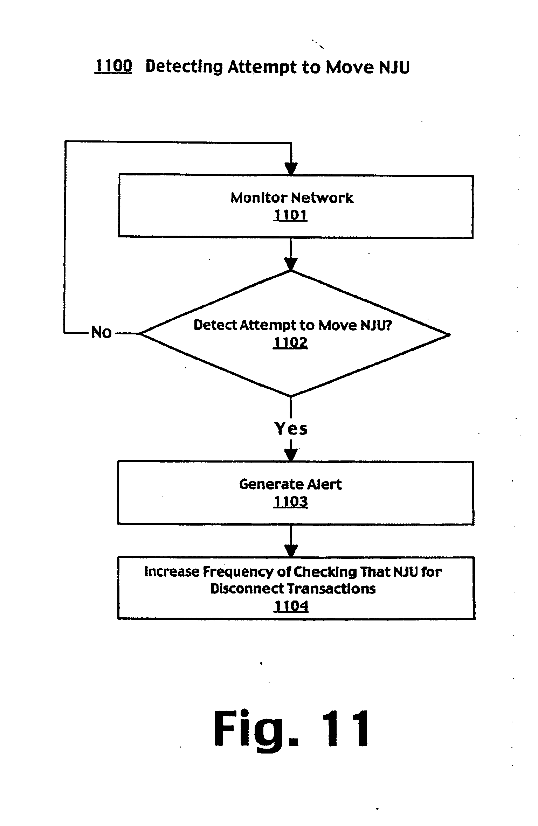

Figure 11 is a flowchart of an exemplary process 1100 for detecting an attempt to move a network jack unit (NJU), according to one embodiment of the present invention. Process 1100 begins with step 1101, wherein the network is monitored.

In step 1102, it is determined whether an attempt to move a network jack unit has been detected. Such an attempt can be detected or inferred by a signal from a network jack unit generated, for instance by an anti-tamper mechanism (e.g., tamper detector 372; Fig. 3). If not, step 1101 is repeated.

If an attempt to move a network jack unit has been detected, then in step 1103, an alert is generated. In step 1104, the frequency is increased for checking the affected network jack unit for a disconnect transaction, completing process 1100.

Where a swap occurs on a network that was powered down at the time of the swap, a potential for topology shift exists. Under such conditions, it can be desirable to be able to discriminate between harmless transitions and those in which the likelihood or possibility of a change puts the coherency of the locational mapping information at risk. In one embodiment, upon detecting such coherency-threatening conditions, locational mapping can be verified.

Part of a topology discovery process undertaken by a monitoring agent (e.g., management centre 104; Fig. 1) can include establishing a table of infrastructure switches attached to a distributive network (e.g., switches 105, distributive network environment 100; Fig. 1). For instance, infrastructure switches can be identified by their MAC addresses assigned to their management ports.

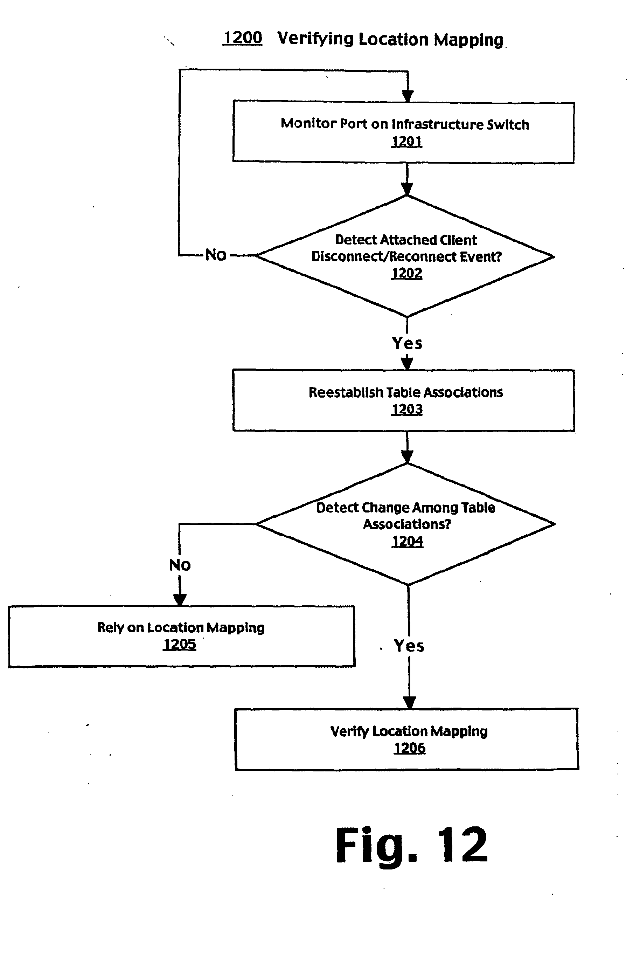

Where an event occurs wherein an attached client (e.g., client devices 107-110; Fig. 1) is removed and reattached, or the infrastructure switch itself is taken off line and reconnected, the table associations can be reestablished. Where no changes in the table associations are detected, it can be inferred that the locational mapping remains reliable. Where however there are changes to the table associations, it is inferred that the locational information is not reliable. One exemplary implementation is explained by reference to Figure 12.

### Exemplary Process for Verifying locational Mapping on a Client Event

Figure 12 is a flowchart of an exemplary process 1200 for verifying locational mapping upon a client event, such as a client disconnect/reconnect, according to one embodiment of the present invention. Process 1200 begins with step 1201, wherein a port on an infrastructure switch (e.g., switch 105; Fig. 1) is monitored.

In step 1202, it is determined whether an event has been detected relating to an attached client (e.g., client device such as a computer, telephone, or other equipment). If not, step 1201 is repeated. Such an event can be exemplified by a disconnect/reconnect event.

In step 1203, upon reconnection or an analogous client event, table associations are reestablished, such as within a central database relating to the affected client device.

In step 1204, it is determined whether any change has been detected among the table associations. If not, then in step 1205, existing table associations are deemed reliable and are relied on. If any change is detected among the table associations, then in step 1206, locational mapping is verified, completing Process 1200.

For instance, consider a case in which a new (e.g., previously unregistered or discovered) MAC address appears on a port. Where the locational mapping information is intact, it can be inferred that the replacement can be an upgrade installation or a replacement of a failed device.

Where new locational mapping information is detected, other ports are checked to attempt to detect whether a port swap could have occurred. A port swap can be indicated by previously known MAC addresses and locational mapping information appearing to have moved between ports on a switch.

Where a swap occurs at a switch within intervening wiring, locational mapping remains intact. Where NJUs get swapped between physical locations, the integrity of their locational mapping information becomes invalid. In one embodiment, NJUs are secured with security screws and/or tamper detectors so as to restrict swapping to "authorized" personnel, who can be assumed to realize the need to maintain locational mapping integrity.

In one embodiment, time domain reflectometry (TDR) or similar cable length measuring techniques can be used to provide additional locational information, based on a cable length. Using such a technique, discrimination can be made between benign port swaps at the switch and those involving physical changes to NJU locations, which can corrupt locational information. For instance, using TDR to ascertain a cable length, that data can be added to the port MAC address association table.

In one embodiment, the duration of a power down period can provide a discriminating factor between benign changes and locational data corrupting changes. For instance, a power outage duration can be ascertained by a central controller (e.g., management centre 104; Fig. 1) tracking time since a last successful poll. A power-down of the monitoring entity itself can be detected by periodic tracking of last alive time stamps taken by the monitoring station or stations, to reactions to a power fail interrupt, or related methods.

Based on how long a network was powered down, certain inferences can be drawn relating to locational information coherence. For instance, where a substantial fraction of units were off line during the same, relatively short period of time, it can be inferred that the cause was a power loss followed by a restore event, such as a power transient.

In such a case, it can be further inferred that the likelihood that units had been moved (which could threaten locational information coherence) during the power down is small. If the duration of the outage was longer, it can be inferred that the locational mapping integrity for the affected portion of the distributed network could be corrupted. Steps can be taken to alert to this possibility and to correct the coherence.

Where the status of infrastructure switches, such as "closet" switches is monitored, further inferences can be drawn. For instance, where many or all of the NJUs connected to a particular switch go down at the same time and the closet switch stays alive, it can be inferred that connections to the NJUs could have been broken in a wiring closet or at a cross connect element in the wiring. This information can be desirable, even though the event does not necessarily threaten locational mapping data, since the NJUs had no opportunity to be moved.

### Exemplary Process for Discriminating Between Benign and Possibly Corrupting Network Changes

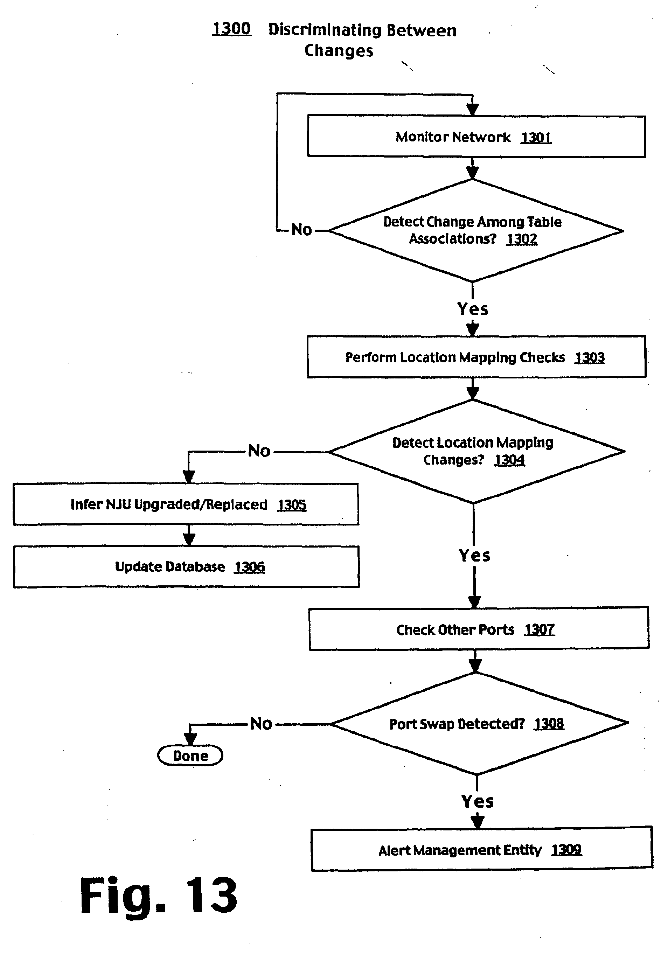

Figure 13 is a flowchart of an exemplary process 1300 for discriminating between a benign network configuration changes and those which can imply possible locational information corruption, according to one embodiment of the present invention. Process 1300 begins with step 1301, wherein a distributed network is monitored.

In step 1302, it is determined whether a change in table associations is detected. If not, step 1301 is repeated. If a change in table associations is detected, then in step 1303, locational mapping checks are performed. In step 1304, it is determined whether there are locational mapping changes. If it is determined that there are no locational mapping changes, then in step 1305, it is inferred that the affected NJU was upgraded or replaced.

If it be determined that there are locational mapping changes, then in step 1306, other ports are checked, such as for devices having a MAC number corresponding to that of the affected NJU, which could be indicative of a port swap. In step 1307, it is determined whether a port swap has been detected. If not, process 1300 can be complete. If a port swap is detected, then in step 1308, a management authority is alerted, completing process 1300.

### Exemplary Process for Inferring locational Information Reliability from Outage Duration

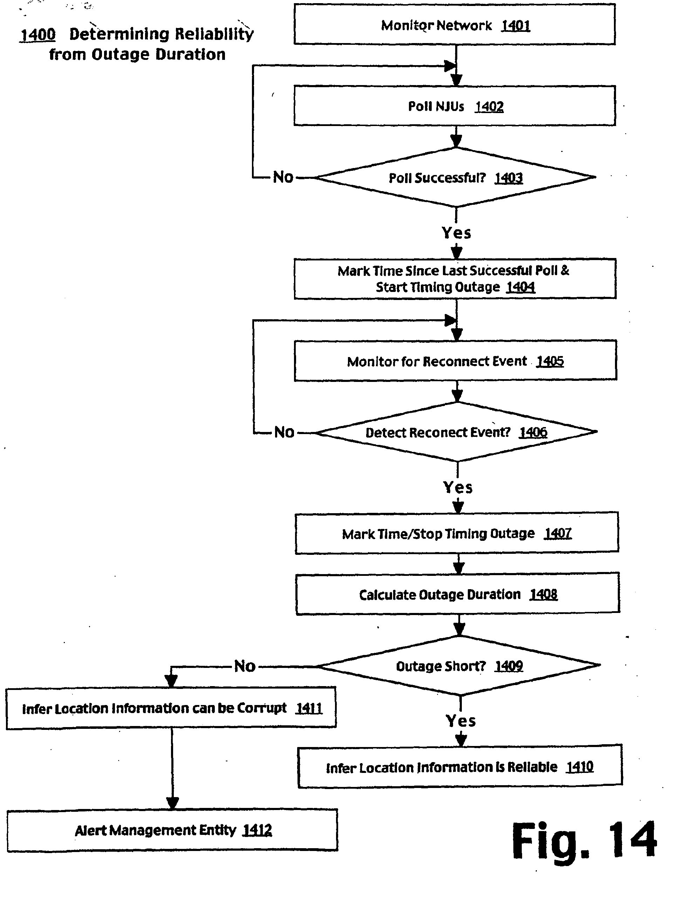

Figure 14 is a flowchart of an exemplary process 1400 for inferring possible corruption of locational information from information relating to an outage duration. Process 1400 begins with step 1401, wherein a distributed network is monitored.

In step 1402, NJUs comprising the distributed network (and/or e.g., other devices) are polled. In step 1403, it is determined whether a poll is successful. If so, step 1402 is periodically repeated. If a poll is unsuccessful, then in step 1404, the time is marked and timing since the last successful poll begins.

In step 1405, the network is monitored for a reconnect event relating to the affected NJUs. In step 1406, it is determined whether a reconnect even has been detected. If not, then step 1405 is repeated. Upon detecting a reconnect event, in step 1407 the timing is stopped for the outage duration and the time is marked. In step 1408, the duration of the outage is calculated.

In step 1409, it is determined whether the outage was short, relative to the time required to remove and reconnect a network jack, for example. If it is determined that the outage was short, then in step 1410, it is inferred that the locational information is reliable. If it is determined that the outage duration was not short, then in step 1411, it is inferred that locational information could be corrupt.

In step 1412, an alert is generated. In step 1413, action is taken to check on the accuracy of the related locational information, completing process 1400.

## Claims

1. A method for maintaining coherence of locational information in a database (101) of a distributed network of network jack units (106), comprising:
performing an accurate initial configuration of the locational information of the database of the distributed network of network jack units;
monitoring the distributed network of network jack units;
upon detection of a change in the distributed network, performing an assessment of the significance of the change on the coherence of the locational information of the database of the distributed network of network jack units; and
upon a determination that the change is significant, initiating an action to update the database of the distributed network of network jack units.

2. A method according to claim 1 wherein the initial configuration comprises accurately entering the locational information at one of the network jack units; and providing the locational information to the database (101).

3. A method according to claim 2 wherein the said action comprises either uploading the locational information from a network jack unit or transferring the locational information from a storage entity.

4. A method according to any foregoing claim wherein the monitoring is performed by a network management entity (310).

5. A method according to any foregoing claim, wherein the detection comprises discovering that one of the network jack units (106) lacks locally associated locational information.

6. A method according to claim 5 wherein the assessment comprises inferring that a network jack unit does not have locational information entered therein and wherein the action comprises providing the locational information to the network jack unit.

7. A method according to any foregoing claim, wherein the detection comprises discovering that one of the network jack units has locally associated locational information which is seemingly new.

8. A method according to claim 5, wherein the assessment comprises inferring that the network jack unit may have locational information entered therein that is incorrect and wherein the action comprises providing an alert and correcting the locational information.

9. A method according to any foregoing claim, wherein the detection comprises discovering that a media access control (MAC) address of one of the network jack units differs from a MAC address listed for that network jack in the database.

10. A method according to claim 9, wherein the assessment comprises inferring that the network jack unit has had correct locational information entered therein and wherein the action comprises updating the database.

11. A method for monitoring a distributed network of network jack units (106) to maintain coherence of locational information in a database (101) of the network, comprising polling one of the network jack units wherein the network jack unit has been known to a management entity (310) performing the monitoring; upon detecting no response to the polling, monitoring for a reconnect event relating to the network jack unit; and
upon detecting the reconnect event, checking an identity of the network jack unit.

12. A method according to claim 11 and further comprising:
upon detecting that the identity differs from a value for an identity associated with the network jack unit stored in the database, inferring that the locational information may corrupt:
sending a corresponding alert; and
taking an action to investigate and correct the locational information.

13. A method for monitoring a distributed network of network jack units to maintain coherence of locational information in a database of the network, comprising:
detecting a power loss to one of the network jack units; and
verifying the locational information as related to the network jack unit.

14. A method according to claim 13 and further comprising detecting an event; and in response to detecting the event, checking for an indication of a power loss, wherein the checking is performed prior to the detecting of a power loss.

15. The method as recited in Claim 17 wherein the event comprises a reboot event and wherein the checking comprises either checking for a power loss flag in a non-volatile memory or checking a memory location for a corrupted pattern wherein the memory location initiates with a pattern that corrupts on a power loss, and wherein the non-volatile memory and the memory location are associated with the network jack unit.

16. A method for monitoring a distributed network of network jack units (106) to maintain coherence of locational information in a database of the network, comprising:
detecting an attempt to move one of the network jack units; and
increasing a frequency of monitoring the network jack unit for a disconnect transaction.

17. A method for monitoring a distributed network of network jack units (106) to maintain coherence of location information in a database (101) of the network, comprising:
detecting a change among table associations;
in response to the detecting, performing a location mapping check;
upon detecting a location mapping change:
inferring that the network jack unit was selectively upgraded and replaced; and
updating the database;
upon detecting no location mapping change, checking another port; and
upon detecting a port swap, alerting a management entity.

18. A computerized system for maintaining coherence of locational information in a database (101) of a distributed network of network jack units (106), comprising a network entity (105) coupled to the database for providing access to the database and communication with the network jack units; and a management entity (310) coupled to the database and to the network jack units through the network entity for monitoring the distributed network of network jacks; wherein the management entity comprises a computer and wherein the system is organized: to perform an accurate configuration of the locational information of the database of the distributed network of network jack units initially; to monitor the distributed network of network jack units; upon detecting a change in the distributed network, to make an assessment of the significance of the change on the coherence of the locational information of the database of the distributed network of network jack units; and upon determining that the change is significant, to initiate an action to update the database of the distributed network of network jack units.

19. A system according to claim 18, wherein the network management entity comprises a central control station and a redundant control station.

20. A computer usable medium having a computer readable program code embodied therein for causing the computer system to execute a method according to any of claims 1 to 17.
